# DEMANDE DE BREVET EUROPEEN

(11) **EP 0 989 038 A1**
(43) Date de publication de la demande: **29.03.2000**
(21) Numéro de dépôt: 99117459.0
(22) Date de dépôt: 09.09.1999
(51) Int. Cl.: B60R 25/02

(54) **Antivol de colonne de direction comportant des moyens perfectionnés de blocage du pêne**

(30) Priorité: 25.09.1998 FR 9812034
(71) Demandeur: Antivols Simplex, 21850 Saint Apollinaire (FR)
(72) Inventeur: Touratier, Thierry, 21000 Dijon (FR)
(74) Mandataire: Lemaire, Marc

(57) **Abrégé**

L'invention propose un antivol de colonne de direction, du type comportant des moyens pour immobiliser le pêne lorsque deux parties de l'antivol sont séparées l'une de l'autre, lesdits moyens comportant au moins un élément de blocage (36) qui est retenu dans une position escamotée par un moyen de retenue (44),
caractérisé en ce que l'antivol comporte un logement (42) délimité transversalement par une face latérale (50) du pêne (16) et par une face en regard (52) du boîtier, les deux faces (50, 52) formant entre elles un angle ouvert vers l'avant, et en ce que, en position de blocage, l'élément de blocage (36) est reçu dans le logement (42) en étant sollicité au contact des deux faces en regard (50, 52) du logement (42) et immobiliser longitudinalement le pêne (16) vers l'arrière par coincement.

## Description

L'invention concerne un antivol de colonne de direction comportant des moyens perfectionnés de blocage du pêne.

L'invention se rapporte plus particulièrement à un antivol de colonne de direction, du type comportant une première partie renfermant un pêne qui, dans une position avancée antivol, est destiné à immobiliser en rotation une colonne de direction, et une seconde partie renfermant un élément de commande du pêne qui commande le pêne entre sa position avancée antivol et une position arrière dégagée, du type dans lequel il est prévu des moyens pour immobiliser le pêne lorsque les deux parties de l'antivol sont séparées l'une de l'autre, et du type dans lequel les moyens de blocage du pêne comportent au moins un élément de blocage qui est monté mobile dans la première partie de l'antivol, qui est sollicité vers une position de blocage par des moyens élastiques et qui est retenu dans une position escamotée, tant que les deux parties de l'antivol ne sont pas séparées, par un moyen de retenue qui coopère avec la seconde partie de l'antivol.

Un tel dispositif est par exemple décrit dans le document FR-A-2.679.504.

Une situation dans laquelle il est intéressant de bloquer le pêne d'un antivol est en cas d'une tentative de vol du véhicule. Dans ce cas, on est dans une situation où l'antivol est dans son état verrouillé dans lequel le pêne est en position avancée antivol pour immobiliser la colonne direction. Il arrive alors parfois que le cambrioleur cherche à rompre la partie du boîtier qui comporte les moyens de commande des déplacements du pêne pour pouvoir accéder à ce pêne et l'amener vers sa position reculée escamotée. Aussi, il est alors intéressant de prévoir un moyen de blocage du pêne qui immobilise celui-ci dans sa position antivol. Toutefois, il faut que cette immobilisation puisse se faire quelle que soit la position réelle du pêne par rapport au boîtier.

Notamment, on sait que l'arbre de colonne est généralement pourvu d'une série d'encoches qui sont réparties régulièrement autour de l'axe de la colonne, et qui sont destinées à recevoir une extrémité avant du pêne de manière à définir plusieurs positions d'immobilisation de la colonne. Toutefois, il est possible que, au moment de l'enclenchement de l'antivol, le pêne ne soit pas en regard d'une de ces encoches, mais au contraire en regard d'une surface périphérique de l'arbre de colonne située entre deux encoches. Dans ce cas, lorsque le pêne est libéré par ses moyens de commande pour être déplacé vers sa position antivol, il vient au contact de la surface périphérique de l'arbre, sans atteindre réellement cette position antivol.

Il faut donc que le moyen de blocage du pêne permette une immobilisation de celui-ci indépendamment du fait que le pêne soit effectivement reçu dans une encoche ou au contraire en appui contre la surface périphérique de l'arbre.

Par ailleurs, on s'est aperçu que, du fait des tolérances de fabrication et de montage, il pouvait y avoir une grande dispersion quant au positionnement relatif du boîtier de l'antivol par rapport à l'arbre de colonne. Dans certains cas, l'incertitude peut être supérieure à la dimension radiale de l'encoche. Aussi, dans ces conditions, on pourrait aboutir à une situation dans laquelle le pêne serait effectivement immobilisé par le moyen de blocage, mais dans une position inefficace dans laquelle il ne coopérerait pas avec l'arbre de colonne.

Le dispositif décrit dans le brevet FR-A-2.679.504 comporte des moyens de blocage du pêne qui font appel à un doigt de blocage, à un élément élastique et à un pion de retenue du doigt de blocage dans une position escamotée.

Comme on peut le voir dans ce document, le doigt de blocage et le pion de retenue coulissent chacun dans un logement spécifique, ces deux logements étant aménagés selon des directions perpendiculaires.

Plus particulièrement, en position de blocage, le doigt de blocage est destiné à être reçu dans une entaille aménagée dans le pêne. De la sorte, le blocage du pêne se fait dans une position relativement précise par rapport à la première partie du boîtier, avec le risque évoqué plus haut que cette immobilisation ne soit pas assurée ou qu'elle le soit dans une position inefficace du pêne.

L'invention a donc que pour but de proposer une nouvelle conception d'un antivol de colonne de direction dans lequel les moyens de blocage du pêne en cas de rupture du boîtier d'antivol assurent un blocage du pêne indépendamment de la position relative du pêne par rapport au boîtier et par rapport à l'arbre de colonne.

Dans ce but, l'invention propose un antivol de colonne de direction, du type comportant une première partie renfermant un pêne qui, dans une position avancée antivol, est destiné à immobiliser en rotation une colonne de direction, et une seconde partie renfermant un élément de commande du pêne qui commande le pêne entre sa position avancée antivol et une position arrière dégagée, du type dans lequel il est prévu des moyens pour immobiliser le pêne lorsque les deux parties de l'antivol sont séparées l'une de l'autre, et du type dans lequel les moyens pour immobiliser le pêne comportent au moins un élément de blocage qui est monté mobile dans la première partie de l'antivol, qui est sollicité vers une position de blocage par des moyens élastiques et qui est retenu dans une position escamotée, tant que les deux parties de l'antivol ne sont pas séparées, par un moyen de retenue qui coopère avec la seconde partie de l'antivol, caractérisé en ce que l'antivol comporte un logement délimité transversalement par une face latérale sensiblement longitudinale du pêne et par une face en regard formée dans la première partie du boîtier, les deux faces formant entre elles un angle ouvert vers l'avant, et en ce que, en position de blocage, l'élément de blocage est reçu dans le logement en étant sollicité longitudinalement vers l'arrière pour venir au contact des deux faces en regard du logement et immobiliser longitudinalement le pêne vers l'arrière par coincement.

Selon d'autres caractéristiques de l'invention
- la face latérale du pêne contre laquelle s'appuie l'élément de blocage est parallèle à une direction longitudinale de coulissement du pêne ;
- en position escamotée, l'élément de blocage est reçu dans une gouttière qui débouche longitudinalement vers l'arrière dans le logement ,
- la gouttière est orientée selon une direction oblique par rapport à la direction longitudinale de coulissement du pêne ;
- les moyens élastiques sont constitués par un ressort hélicoïdal de compression qui est agencé dans la gouttière et qui sollicite l'élément de blocage en direction du logement ;
- l'élément de blocage est une bille ;
- l'élément de blocage est un coin qui présente deux faces opposées formant entre elles un angle identique à celui des faces en regard qui délimitent le logement ;
- le moyen de retenue est une tige qui est montée coulissante dans la première partie du boîtier ;
- le moyen de retenue est un levier qui est susceptible de basculer dans le boîtier ;
- l'antivol comporte deux moyens de retenue disposés de part et d'autre du pêne ;
- le moyen de retenue est un levier basculant dont une extrémité coopère avec la seconde partie du boîtier et dont l'autre extrémité est divisée en deux branches, chacune des branches coopérant avec l'un des moyens de blocage pour le retenir en position escamotée.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues schématiques en coupe selon un plan perpendiculaire à une colonne de direction de véhicule automobile illustrant l'immobilisation en rotation de la colonne par un premier mode de réalisation d'un dispositif d'antivol dont le pêne est représenté respectivement en position dégagée et en position antivol sur les figures 1 et 2 ;
- la figure 3 est une vue similaire à celle des figures 1 et 2, dans laquelle l'antivol selon le premier mode de réalisation de l'invention est représenté après la séparation des deux parties de l'antivol, le pêne étant reçu au fond d'une encoche ;
- la figure 4 est une vue similaire à celle de la figure 3, dans laquelle le blocage du pêne est assuré alors que le pêne de l'antivol est en appui contre la surface périphérique de l'arbre de colonne ;
- les figures 5 et 6 sont des vues de détail illustrant plus particulièrement le moyen de blocage respectivement en position escamotée et en position de blocage ;
- la figure 7 est une vue en coupe longitudinale illustrant un deuxième mode de réalisation de l'invention, les moyens de blocage étant en position escamotée selon la ligne 7-7 de la figure 8 ;
- la figure 8 est une vue en coupe selon la ligne 8-8 de la figure 7 ;
- la figure 9 est une vue en coupe selon la ligne 9-9 de la figure 8 ; et
- les figures 10 à 12 sont des vues similaires à celles des figures 7 à 9 dans lesquelles les moyens de blocage sont illustrés en position de blocage, après rupture de l'antivol.

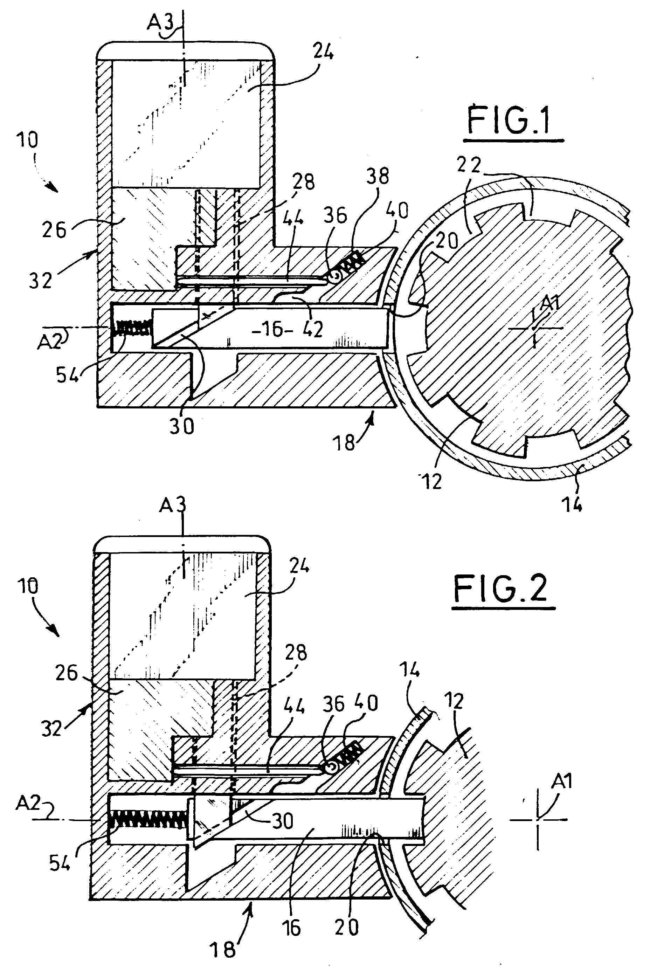

On a illustré sur la figure 1 un antivol 10 de véhicule automobile qui est destiné à immobiliser en rotation un arbre de colonne de direction 12. L'arbre de colonne 12 est monté à rotation autour de son axe A1 dans un tube de colonne 14, qui est fixe dans le véhicule, et sur lequel est fixé l'antivol 10.

L'antivol 10 comporte un pêne 16 qui s'étend longitudinalement selon une direction A2 qui est sensiblement perpendiculaire à l'axe A1 de la colonne 12. Le pêne 16 est monté à coulissement selon la direction A2 dans une première partie 18 de l'antivol qui est réalisée sous la forme d'un boîtier particulièrement rigide.

Le pêne 16 est destiné à être déplacé entre une position reculée dégagée illustrée à la figure 1 et une position avancée antivol illustrée à la figure 2. En position antivol, une extrémité avant du pêne 16 dépasse radialement en direction de l'axe A1 à l'intérieur du tube de colonne 14, au travers d'une ouverture 20, pour être reçue dans l'une d'une série d'encoches 22 complémentaires aménagées dans l'arbre 12 de la colonne de direction. Les encoches 22 sont réparties angulairement de manière régulière autour de l'axe A1 de telle sorte que l'arbre 12 peut être immobilisé en différentes positions angulaires lorsque le pêne 16 est engagé dans l'une des encoches 22.

Au contraire, lorsque le pêne 16 est dégagé des encoches 22, l'arbre 12 de la colonne de direction est libre en rotation autour de son axe dans le tube 14.

De manière connue, l'antivol 10 comporte des moyens pour assurer la commande du pêne, ces moyens devant pouvoir par ailleurs permettre d'une part d'identifier un utilisateur autorisé et, d'autre part, de commander l'alimentation de différents circuits électriques du véhicule.

A cet effet, l'antivol 10 comporte par exemple un verrou rotatif 24 destiné à être commandé par une clef, et un commutateur rotatif 26 entraîné par un rotor du verrou. Lorsqu'une clef conforme est engagée dans le verrou 24, la rotation de celui-ci est autorisée, ce qui par exemple peut provoquer le coulissement d'une tirette 28 selon la direction de l'axe A3 du verrou 24 entre une position verrouillée illustrée à la figure 2 et une position déverrouillée à la figure 1. Le verrou 24 commande simultanément le commutateur rotatif 26.

Dans l'exemple de réalisation illustré, la direction A3 de coulissement de ta tirette 28 est perpendiculaire à celle A2 du pêne 16, et ces deux éléments sont liés l'un à l'autre par des éléments à rampe 30 qui permettent de convertir un mouvement de translation en un autre mouvement de translation. Toutefois, les moyens de commande du déplacement du pêne peuvent être réalisés suivant d'autres manières, par exemple en utilisant une came à excentrique entraînée par le verrou 24.

Comme on peut le voir sur les figures, le verrou 24 et le commutateur 26 sont reçus dans une seconde partie 32 du boîtier de l'antivol qui s'étend sensiblement selon la'direction de l'axe A3 depuis la première partie 18. Dans l'exemple de réalisation illustré sur les figures, le boîtier de l'antivol est réalisé en une seule pièce mais il peut être prévu une ligne d'amorce de rupture (non représentée) qui permet aux deux parties 18, 32 de se séparer l'une de l'autre si un effort trop violent est appliqué sur le boîtier.

L'antivol 10 selon l'invention peut être agencé de manière conventionnelle, à proximité du volant, auquel cas la seconde partie 32 de l'antivol 10 est accessible depuis l'habitacle du véhicule, afin que le conducteur puisse y introduire une clef. Toutefois, l'antivol 10 selon l'invention peut aussi être agencé au niveau de l'extrémité inférieure de la colonne de direction, à proximité par exemple d'une crémaillère de direction, c'est-à-dire dans le compartiment moteur. Dans ce cas, le mécanisme de commande du pêne 16 sera du type motorisé et commandé à distance depuis l'habitacle.

Conformément aux enseignements de l'invention, l'antivol 10 est muni de moyens pour assurer le blocage du pêne 16 en cas de séparation des deux parties 18, 32 du boîtier de l'antivol 10.

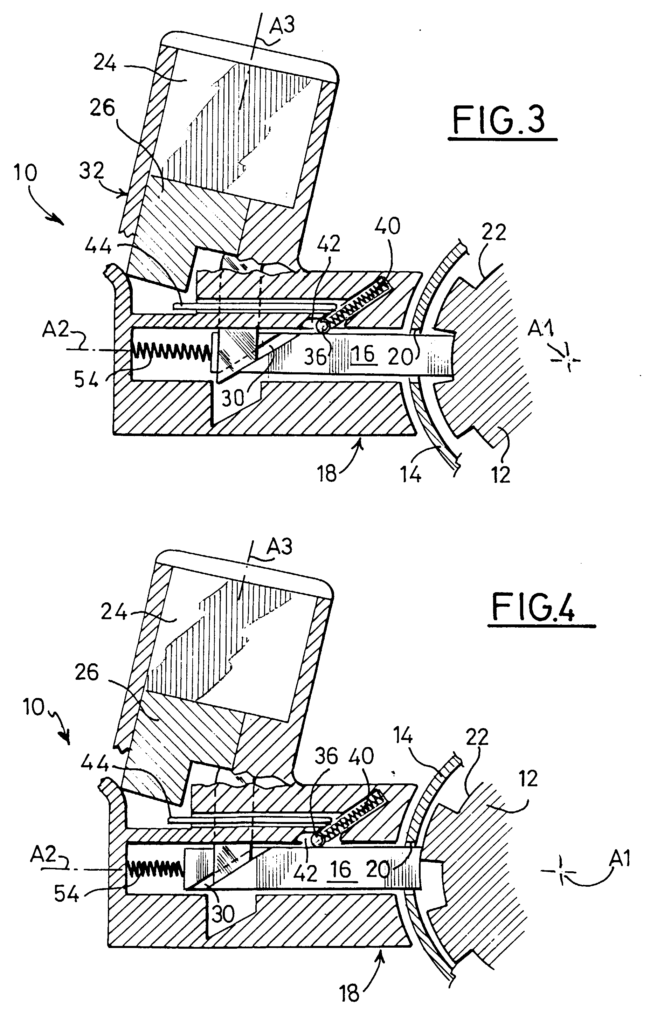

Selon l'invention, le blocage du pêne 16 peut se faire une fois l'antivol enclenché, c'est-à-dire une fois que celui-ci aura été commandé vers sa position antivol, indépendamment du fait que celui-ci ait effectivement atteint cette position antivol, au fond de l'une encoches 22 ainsi que cela est représenté à la figure 3, ou qu'il n'ait pas atteint cette position, ainsi que cela est représenté à la figure 4, lorsqu'il est en appui contre la surface périphérique externe de l'arbre de colonne, entre deux encoches 22.

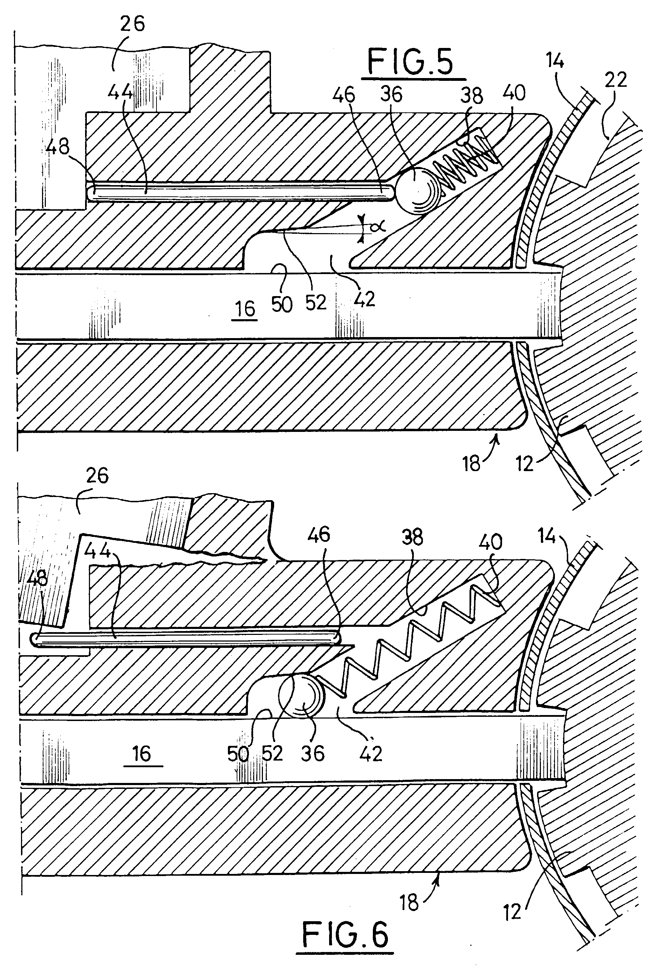

Dans l'exemple de réalisation de l'invention qui est illustré sur les figures 1 à 5, on peut voir que le moyen de blocage du pêne 16 comporte une bille 36 qui est retenue à l'intérieur d'une gouttière 38 aménagée dans la première partie 18 du boîtier, à l'encontre de l'action d'un ressort de compression 40 qui est agencé dans la gouttière 38 et qui tend à solliciter la bille 36 hors de la gouttière, en direction d'un logement 42.

Dans le premier mode de réalisation illustré sur les figures 1 à 6, la gouttière 38 est orientée selon une direction oblique par rapport à la direction longitudinale A2 de coulissement du pêne 16. De la sorte, le ressort 40 sollicite la bille 36 transversalement vers le pêne 16 et longitudinalement vers l'arrière.

Les moyens de retenue de la bille 36 sont constitués par une tige 44 qui est montée coulissante dans la première partie 18 du boîtier selon une direction parallèle à la direction A2 de coulissement du pêne 16.

La tige 44 comporte ainsi une extrémité avant 46, qui s'étend en travers de la gouttière 38, et une extrémité arrière 48 qui coopère avec la deuxième partie 32 de l'antivol 10, en l'occurrence en étant en appui contre le commutateur 26. Bien entendu, la tige 44 pourrait coopérer avec tout autre constituant de la deuxième partie 32 de l'antivol 10.

Tant que la bille 36 est retenue dans la gouttière 38 par la tige 44, elle ne peut pas coopérer avec le pêne 16 et celui-ci est donc libre d'être déplacé entre ses positions antivol et dégagée.

Au contraire, ainsi que cela est représenté sur les figures 3, 4 et 6, lorsque les deux parties 18, 32 de l'antivol 10 sont séparées l'une de l'autre suite à d'une rupture du boîtier au niveau de la ligne de faiblesse, la bille 36, poussée par le ressort 40, repousse la tige 44 qui n'est plus retenue par l'interrupteur 26 qui s'est décalé. En repoussant la tige 44, la bille se trouve libre de gagner le logement 42 dans lequel débouche la gouttière 38.

Conformément à l'invention, le logement 42 est délimité, selon une direction transversale perpendiculaire à la direction A2 de coulissement du pêne 16, d'une part par une face latérale longitudinale 50 du pêne 16, et d'autre part par une face en vis-à-vis 52 formée dans la première partie 18 du boîtier.

De manière avantageuse, il est prévu que la face latérale 50 du pêne 16 soit lisse et parallèle à la direction A2 de coulissement su pêne 16, de manière par exemple à pouvoir aussi être utilisée pour assurer le guidage en coulissement de ce dernier.

Au contraire, la face en vis-à-vis 52 forme avec la direction de coulissement un angle α ouvert vers l'avant. Cet angle α sera choisi relativement faible, par exemple inférieur à 10 degrés.

Au niveau de l'entrée du logement 42, c'est-à-dire là où la gouttière 38 débouche dans le logement 42, on veillera à ce que la distance séparant transversalement les deux faces 50, 52 soit légèrement supérieure au diamètre de la bille 36. Au contraire, au niveau de l'extrémité arrière du logement 42, cette distance devra obligatoirement être inférieure au diamètre de la bille.

Ainsi, lorsque la bille 36 pénètre dans le logement 42, elle est poussée vers l'arrière par le ressort 40 jusqu'à venir en appui simultanément contre les deux faces en vis-à-vis 50, 52 du logement 42. La bille 36 ne peut alors plus progresser longitudinalement vers l'arrière.

A ce moment, le pêne 16 est immobilisé longitudinalement vers l'arrière. En effet, si l'on tente alors de repousser le pêne vers l'arrière, la bille 36 est soumise en ses points de contact avec les faces 50, 52 à des forces qui tendent à la faire rouler sur ces faces pour se diriger vers l'arrière, ce qu'elle ne peut faire du fait du rétrécissement transversal progressif du logement 42 dans cette direction.

Bien entendu, les matériaux constituant la bille 36 et les faces 50, 52, ainsi que leur état de surface seront choisis pour qu'il ne puisse pas y avoir de glissement de la bille 36 au niveau du contact avec les deux faces 50, 52.

Avec ce dispositif anti-recul, on peut voir sur les figures 3 et 4 que l'on peut empêcher le pêne d'être retiré vers l'arrière quelle que soit sa position initiale au moment de la rupture du boîtier. Le système est enclenché sans que l'élément de blocage ait à pénétrer dans une entaille pratiquée dans le pêne.

On peut remarquer que le même effet anti-recul pourrait être obtenu en remplaçant la bille 36 par un coin comportant deux faces opposées formant entre elles un angle α égal à l'angle formé par les faces en vis-à-vis 50, 52 du logement 42.

Cependant, l'utilisation d'une bille rend ce système anti-recul particulièrement intéressant en ce que, lorsque le pêne 16 est initialement bloqué par le système anti-recul alors que le pêne 16 est en appui entre deux encoches 22 contre la surface périphérique de l'arbre de colonne 12, le système permet au pêne 16 de s'engager au fond d'une dent lorsque l'arbre de colonne 12 est tourné d'un angle adéquat. En effet, lorsque le pêne 16 se trouve en regard d'une encoche 22, on peut voir qu'il est sollicité vers l'avant par un puissant ressort 54 et il n'est plus retenu vers l'avant par l'arbre de colonne 14. Le pêne 16 aura donc tendance à se déplacer vers l'avant, entraînant avec lui la bille 36 vers l'entrée du logement où ce dernier s'élargit. L'utilisation d'une bille 36 qui est susceptible de rouler sans frottement à la fois contre la face 50 du pêne 16 et contre celle 52 du boîtier permet d'éviter le coincement du pêne, notamment si ce dernier a été préalablement sollicité vers l'arrière.

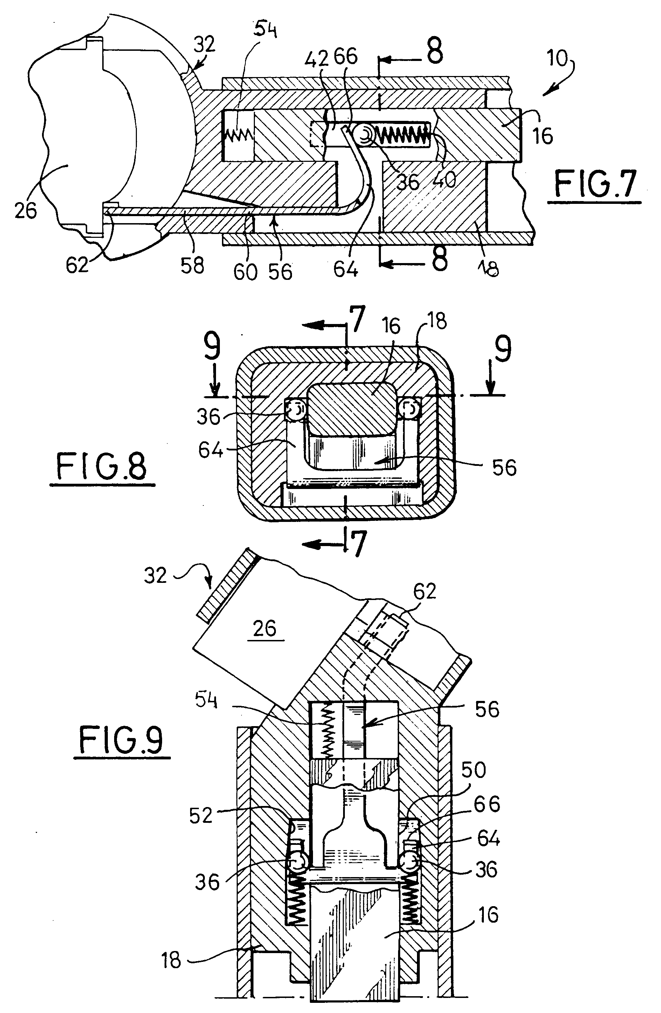

On a illustré sur les figures 7 à 12 un deuxième mode de réalisation de l'invention dans lequel on a prévu deux billes 36 qui sont disposées chacune de part et d'autre transversalement du pêne 16. Chaque bille 16 est destinée à être reçue dans un logement 42 correspondant, chaque logement 42 étant délimité par une face latérale 50 du pêne 16 et par une face en vis-à-vis 52 formée dans la première partie 18 du boîtier.

A la différence du premier mode de réalisation, les gouttières 38 dans lesquelles les billes 36 sont reçues en position escamotée sont agencées longitudinalement dans le prolongement en avant du logement 42. Chaque gouttière 38 est ainsi délimitée transversalement d'un côté par l'une des faces latérales 50 du pêne. Cependant, la largeur transversale des gouttières 38 est telle que les billes 36 peuvent s'y déplacer librement selon la direction longitudinale, les ressorts 40 sollicitant les billes 36 longitudinalement vers l'arrière.

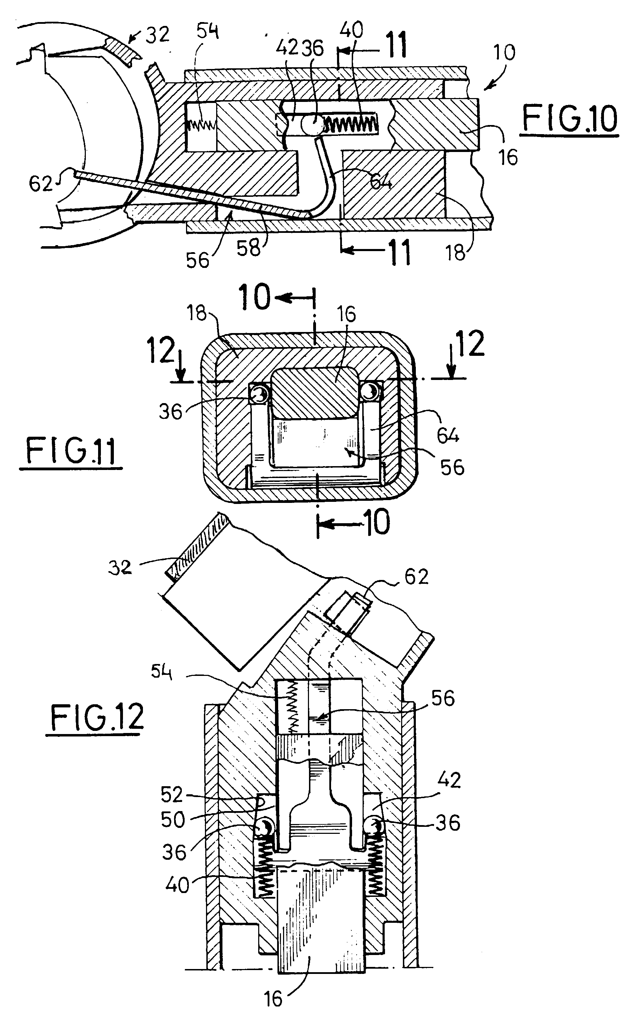

Par ailleurs, le moyen de retenue des billes en position escamotée est constitué par un levier 56 qui est susceptible de basculer dans le boîtier entre une position de retenue illustrée aux figures 7 à 9, et une position effacée illustrée aux figures 10 à 12.

Le levier 56 comporte un manche 58 qui s'étend longitudinalement dans la première partie du boîtier 18. Le manche peut basculer autour d'une portion centrale 60, autour d'un axe parallèle à la direction joignant les deux billes 36. Une première extrémité 62 du manche est en appui contre un élément de la seconde partie 32, en l'occurrence le commutateur 26, tout au moins tant que l'antivol n'a pas été détérioré.

L'autre extrémité du manche 58 est conformée de manière à présenter deux branches parallèles 64 qui s'étendent sensiblement perpendiculairement à la direction A2 de coulissement du pêne 16 et qui sont décalées transversalement l'une de l'autre de manière que leur extrémités libres 66 soit agencées chacune de part et d'autre du pêne 16.

Comme on peut le voir sur les figures 8 et 9, tant que le boîtier de l'antivol est intact, le levier 56 est maintenu dans une position telle que les extrémités libres 66 des deux branches 64 se trouve chacune agencées en travers de la gouttière 38 correspondant, empêchant ainsi les billes 36 de pénétrer dans les logements 42 correspondants.

Au contraire, lorsque le boîtier est rompu, l'extrémité 62 du levier 56 se dégage de l'interrupteur 26 et, n'étant plus maintenu, le levier 56 bascule du fait de la poussée des billes 36. Pour favoriser ce basculement, on peut voir sur les figures que les branches 64 ne sont pas rigoureusement perpendiculaires à la direction A2 de coulissement du pêne et à l'orientation des gouttières 38. Elles sont en réalité inclinées vers l'arrière pour que l'action des billes 36 sur les extrémités libres 66 tende à provoquer le basculement du levier de telle sorte que les branches 64 s'escamotent hors des gouttières 38, libérant ainsi les billes 36 qui peuvent alors s'engager dans les logements 42 et venir empêcher tout retrait du pêne 16, ainsi que cela est représenté aux figures 10 à 12.

Dans les deux modes de réalisation de l'invention, on pourra utiliser à titre de variante des rouleaux cylindriques à la place des billes.

## Revendications

1. Antivol de colonne de direction, du type comportant une première partie (18) renfermant un pêne (16) qui, dans une position avancée antivol, est destiné à immobiliser en rotation une colonne de direction, et une seconde partie (32) renfermant un élément de commande (24, 26) du pêne (16) qui commande le pêne (16) entre sa position avancée antivol et une position arrière dégagée, du type dans lequel il est prévu des moyens (36) pour immobiliser le pêne lorsque les deux parties de l'antivol sont séparées l'une de l'autre, et du type dans lequel les moyens pour immobiliser le pêne (16) comportent au moins un élément de blocage (36) qui est monté mobile dans la première partie (18) de l'antivol (10), qui est sollicité vers une position de blocage par des moyens élastiques (40) et qui est retenu dans une position escamotée, tant que les deux parties (18, 32) de l'antivol ne sont pas séparées, par un moyen de retenue (44, 56) qui coopère avec la seconde partie de l'antivol,
caractérisé en ce que l'antivol comporte un logement (42) délimité transversalement par une face latérale (50) sensiblement longitudinale du pêne (16) et par une face en regard (52) formée dans la première partie (18) du boîtier, les deux faces (50, 52) formant entre elles un angle ouvert vers l'avant, et en ce que, en position de blocage, l'élément de blocage (36) est reçu dans le logement (42) en étant sollicité longitudinalement vers l'arrière pour venir au contact des deux faces en regard (50, 52) du logement (42) et immobiliser longitudinalement le pêne (16) vers l'arrière par coincement.

2. Antivol selon la revendication 1, caractérisé en ce que la face latérale (50) du pêne (16) contre laquelle s'appuie l'élément de blocage (36) est parallèle à une direction longitudinale (A2) de coulissement du pêne (16).

3. Antivol selon l'une quelconque des revendications précédentes, caractérisé en ce que, en position escamotée, l'élément de blocage (36) est reçu dans une gouttière (38) qui débouche longitudinalement vers l'arrière dans le logement (42).

4. Antivol selon la revendication 3, caractérisé en ce que la gouttière (38) est orientée selon une direction oblique par rapport à la direction longitudinale (A2) de coulissement du pêne (16).

5. Antivol selon l'une quelconque des revendications 3 ou 4, caractérisé en ce que les moyens élastiques sont constitués par un ressort hélicoïdal de compression (40) qui est agencé dans la gouttière (38) et qui sollicite l'élément de blocage (36) en direction du logement (42).

6. Antivol selon l'une quelconque des revendications précédentes, caractérisé en ce que l'élément de blocage est une bille (36).

7. Antivol selon l'une quelconque des revendications 1 à 6, caractérisé en ce que l'élément de blocage est un coin qui présente deux faces opposées formant entre elles un angle identique à celui des faces en regard (50, 52) qui délimitent le logement (42).

8. Antivol selon l'une quelconque des revendications précédentes, caractérisé en ce que le moyen de retenue est une tige (44) qui est montée coulissante dans la première partie (18) du boîtier.

9. Antivol selon l'une quelconque des revendications 1 à 7, caractérisé en ce que le moyen de retenue est un levier (56) qui est susceptible de basculer dans le boîtier.

10. Antivol selon l'une quelconque des revendications précédentes, caractérisé en ce que l'antivol comporte deux moyens de retenue (56, 64) disposés de part et d'autre du pêne (16).

11. Antivol selon les revendications 9 et 10 prises en combinaison, caractérisé en ce que le moyen de retenue est un levier basculant (56) dont une extrémité (62) coopère avec la seconde partie (32) du boîtier et dont l'autre extrémité est divisée en deux branches (64), chacune des branches coopérant avec l'un des moyens de blocage (36) pour le retenir en position escamotée.
